# EUROPÄISCHE PATENTSCHRIFT

(11) **EP 0 584 623 B1**
(45) Veröffentlichungstag und Bekanntmachung des Hinweises auf die Patenterteilung: **26.03.1997**
(21) Anmeldenummer: 93112723.7
(22) Anmeldetag: 09.08.1993
(51) Int. Cl.: H02M 3/335

(54) **Umrichter zur Erzeugung einer konstanten Ausgangsspannung**
Current-mode DC converter
Convertisseur en courant continu à mode de courant

(30) Priorität: 28.08.1992 DE 4228764
(43) Veröffentlichungstag der Anmeldung: 02.03.1994
(73) Patentinhaber: SIEMENS AKTIENGESELLSCHAFT, 80333 München (DE)
(72) Erfinder: Nonnenmacher, Ulrich, D-82131 Gauting (DE); Wagner, Franz, D-81377 München (DE)

(56) Entgegenhaltungen:
- EP-A- 0 503 446
- EP-A- 0 509 343
- US-A- 4 975 819
- US-A- 5 086 382

## Beschreibung

Die Erfindung bezieht sich auf einen Umrichter zur Erzeugung einer konstanten Ausgangsspannung. Dabei ist der elektronische Schalter insbesondere mit Hilfe eines Taktgebers zu vorgegebenen Einschaltzeitpunkten periodisch einschaltbar. Anders als bei einem derartigen Umrichter mit konstanter Schaltfrequenz kann gegebenenfalls eine konstante Anschaltzeit des Schalttransistors vorgesehen sein.

Ein derartiger Umrichter, bei dem die Abweichung der Ausgangsspannung von einer Referenzspannung als Sollwert mit einer dem Momentanwert des Eingangsstroms proportionalen, als Istwert betrachteten Meßspannung verglichen wird, bewirkt eine Konstantspannungsregelung spezieller Art, die auch als Current-Mode-Regelung bezeichnet wird.

Anordnungen zur Current-Mode-Regelung sind z.B. aus H. Neufeld "Advanced Current-Mode Control Using the CS 320, Cherry Semiconductor Corporation, 2/88, Seite 17, bekannt. Eine erste Schaltungsvariante sieht eine konstante Anschaltzeit, eine zweite Schaltungsvariante eine konstante Taktfrequenz vor.

Aus der nicht vorveröffentlichten europäischen Patentanmeldung EP 0 509 343 A2 ist ein Verfahren zum Betreiben eines Schaltreglers sowie dessen Anordnung offenbart.

Aufgabe der Erfindung ist es, bei einem Umrichter der eingangs genannten Art einer Anzeige- und/oder Steuervorrichtung an ihrem Eingang eine Steuerspannung zur Verfügung zu stellen, die wenigstens näherungsweise dem Mittelwert des Laststromes proportional ist.

Man kann zur Gewinnung der benötigten Steuerspannung im ausgangsseitigen Laststromkreis einen Stromsensor vorsehen. Verwendet man als Stromsensor einen Meßwiderstand, der im Hinblick auf die benötigte Größe der Meßspannung bemessen ist, so kann sich ein unzulässig großer Spannungsabfall bzw. Leistungsverbrauch ergeben. Gibt man dem Meßwiderstand einen kleineren Wert, so kann eine Verstärkung der Meßspannung erforderlich werden, was mit einem unerwünschten Mehraufwand verbunden ist.

Bei Anordnung eines Transformators zwischen primärseitigem und sekundärseitigem Wechselstromzwischenkreis ist der primärseitige Pulsstrom in einer durch das Übersetzungsverhältnis des Transformators vorgegebenen Weise dem durch die Gleichrichterdiode fließenden sekundärseitigen Pulsstrom proportional. Ferner ist der interessierende Mittelwert des Laststromes im eingeschwungenen Zustand gleich dem Mittelwert des während der Leitendphase der Gleichrichterdiode fließenden sekundärseitigen Pulsstromes. Der Mittelwert dieses Pulsstromes ist bei nicht lückendem Betrieb des Durchflußumrichters, d.h. bei kontinuierlichem Stromfluß durch die Speicherinduktivität gleich dem Spitzenwert, vermindert um die halbe Welligkeit.

Überlegungen im Rahmen der Erfindung haben ergeben, daß bei einem Umrichter, dessen Ausgangsspannung mittels einer unterlagerten Stromregelung auf einen konstanten Wert geregelt wird, am Sollwerteingang des Komparators eine Spannung zur Verfügung steht, die ein Maß für den Mittelwert des Laststromes ist. Entsprechendes gilt beim Sperrumrichter, der mit konstanter Eingangsspannung betrieben wird. Beim Durchflußumrichter resultiert der Zusammenhang daraus, daß der Komparator einerseits jeweils beim Maximalwert des sekundären Pulsstromes den Leistungstransistor des Durchflußumrichters sperrt und andererseits zu diesem Zeitpunkt am Istwerteingang des Komparators eine dem Istwert des primärseiten Pulsstromes proportionale Meßspannung anliegt, die auch dem Scheitelwert des sekundärseitigen Pulsstromes proportional ist und praktisch auch ein Maß für den mittleren Laststrom ist.

Beim Sperrumrichter, der an konstanter Eingangsspannung betrieben wird, ist der Scheitelwert des Primärstromes proportional dem Mittelwert des Ausgangsstromes.

Ausgehend von dieser Erkenntnis wird die genannte Aufgabe durch die im Patentanspruch 1 angegebenen Maßnahmen gelöst. Die Steuer- und/oder Anzeigevorrichtung erhält dabei insbesondere eine Gleichspannung, die dem mittleren Ausgangsstrom proportional ist, und dies beim Durchflußumrichter praktisch unabhängig von der Eingangsspannung.

Dabei ergibt sich der Vorteil, daß für die Anzeige- und/oder Steuervorrichtung weder ein eigener Stromsensor noch eine eigene Vorrichtung zur Verstärkung einer Meßspannung erforderlich ist.

Kann beim Durchflußumrichter die Welligkeit des sekundärseitigen Pulsstromes bei besonderen Anforderungen an die Meßgenauigkeit nicht vernachlässigt werden, ist eine entsprechende Kompensation, insbesondere in Verbindung mit der Sicherstellung eines nicht lückenden Betriebs zweckmäßig bei dem der durch die Speicherinduktivität fließende Strom keine Lücken aufweist.

Vorteilhafte Ausgestaltungen der Erfindung ergeben sich aus den Ansprüchen 2 bis 4.

Die Weiterbildung nach Anspruch 2 bietet zwei Anschlüsse für Steuersignale, deren Größe dem Ausgangsstrom proportional ist.

Die Maßnahmen nach Anspruch 3 haben den Vorteil, daß eine zur Entlastung des Leistungsschalters vorgesehene Entlastungsschaltung ohne besonderen Steueraufwand optimal an den jeweiligen Belastungsfall angepaßt werden kann.

Die Weiterbildungen nach den Ansprüchen 4 und 6 können jeweils dazu dienen, mit geringem Aufwand auf eine drohende Überlastung des Umrichters hinzuweisen.

Die Erfindung wird anhand der in den Figuren dargestellten Ausführungsbeispiele näher erläutert.

Es zeigen
- Fig. 1: einen Durchflußumrichter mit Spannungsregelung durch unterlagerte Stromregelung,
- Fig. 2: eine abgewandelte Teilschaltung des Durchflußumrichters nach Fig. 1 und
- Fig. 3: einen Durchflußumrichter, dessen Steuerschaltung zwei Komparatoren enthält.

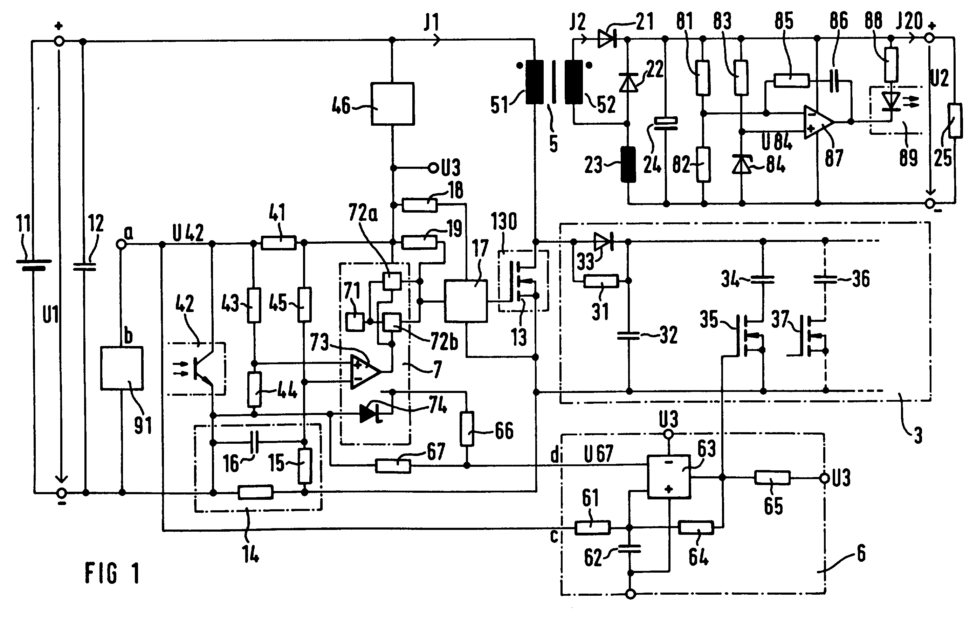

Bei dem Eintakt-Durchflußumrichter nach Fig. 1 liegt die von der Gleichspannungsquelle 11 gelieferte Eingangsspannung U1 am Kondensator 12, die Ausgangsspannung U2 am Kondensator 24. Parallel zum Kondensator 12 liegt in einem primärseitigen Wechselstromzwischenkreis eine aus der Primärwicklung 51 des Transformators 5, dem Leistungsschalter 13 und dem Strommeßwiderstand 14 gebildete Serienschaltung.

Als Leistungsschalter 13 dient der Feldeffekttransistor 130, der mit seinem Steuereingang an den Treiber 17 angeschlossen ist. Der Treiber 17 liegt über den Widerstand 18 an der Hilfsspannung U3 und wird von der Steuerschaltung 7 gesteuert.

Die Steuerschaltung 7 enthält den Taktgeber 71, die vom Taktgeber 71 und vom Komparator 73 gesteuerten Impulsdauermodulatoren 72a und 72b sowie die Referenzspannungsquelle 74. Die beiden Impulsdauermodulatoren 72a und 72b bilden eine Vorrichtung zur Impulsdauermodulation, die taktgesteuert eine Folge von impulsdauermodulierten Einschaltimpulsen über den Treiber 17 an den Steuereingang des Leistungsschalters 13 abgibt.

Die Primärwicklung 51 des Transformators 5 wird daher über den Leistungsschalter 13 periodisch an die Eingangsspannungsquelle 11 gelegt.

Zwischen der Sekundärwicklung 52 des Transformators 5 und dem Kondensator 24 liegt die Gleichrichterdiode 21. In einem auf die Gleichrichterdiode 21 folgenden Querzweig ist die Freilaufdiode 22 angeordnet. In einem Längszweig zwischen Freilaufdiode 22 und Kondensator 24 liegt die Drossel 23. Am Kondensator 24 steht die Ausgangsspannung U2 für den einen Verbraucher bildenden Lastwiderstand 25 zur Verfügung. In den Lastwiderstand 25 fließt der Ausgangsstrom I20.

Als Fehlerverstärker für die Ausgangsspannung U2 dient der Differenzverstärker 87. Der invertierende Eingang des Differenzverstärkers 87 ist an den Abgriff des aus den Widerständen 81 und 82 bestehenden, parallel zum Ausgang des Durchflußumrichters angeordneten Spannungsteilers 81, 82 angeschlossen. Mit Hilfe der aus dem Widerstand 83 und der Z-Diode 84 bestehenden Serienschaltung wird die Referenzspannung U84 gewonnen, die an den nicht invertierenden Eingang des Differenzverstärkers 87 geführt ist. Zwischen dem Ausgang und dem invertierenden Eingang des Differenzverstärkers 87 liegt die aus dem Widerstand 85 und dem Kondensator 86 bestehende Serienschaltung. Der Ausgang des Differenzverstärkers 87 ist über die aus der Fotodiode 89 und dem Widerstand 88 bestehende Serienschaltung an den Pluspol des Umrichterausgangs geführt. Die Fotodiode 89 ist Bestandteil des Optokopplers 89, 42.

Der zum Optokoppler 89, 42 gehörende Fototransistor 42 liegt mit seinem Emitter am Minuspol des Umrichtereingangs und ist mit seinem Kollektor über den Widerstand 41 an die mit Hilfe des Vorreglers 46 gewonnene Hilfsspannung U3 geführt, die eine konstante Gleichspannung ist. Am Ausgang des Vorreglers 46 liegt somit ein Spannungsteiler, der aus dem Widerstand 41 und der Kollektor-Emitterstrecke des Fototransistors 42 besteht.

Parallel zu dem im primärseitigen Wechselstromzwischenkreis liegenden Widerstand 14 liegt die aus dem Widerstand 15 und dem Kondensator 16 bestehende Serienschaltung. Der Kondensator 16 ist dabei mit dem Minuspol des Umrichtereingangs verbunden. Diese Serienschaltung 15, 16 bildet ein RC-Glied, mit dessen Hilfe die am Widerstand 14 auftretende Meßspannung von störenden Spitzen befreit wird, die jeweils beim Beginn der Einschaltphase des den Leistungsschalter 13 bildenden Feldeffekttransistors 130 entstehen.

Am Verbindungspunkt zwischen Widerstand 15 und Kondensator 16, d.h. am Ausgang des RC-Gliedes 15, 16 liegt der invertierende Eingang des Komparators 73. Der nicht invertierende Eingang des Komparators 73 ist mit dem Abgriff des aus den Widerständen 43 und 44 bestehenden und parallel zur Kollektor-Emitterstrecke des Fototransistors 42 liegenden Spannungsteilers angeschlossen.

Der invertierende Eingang des Komparators 73 ist außerdem über den Widerstand 45 an die Hilfsspannung U3 geführt. Der Widerstand 45 bewirkt eine leichte Anhebung des Potentials am invertierenden Eingang des Komparators 73, z.B. um etwa 100 mV. Hierdurch wird sichergestellt, daß das Potential am nicht invertierenden Eingang des Komparators 73 im Leerlauffall das Potential am invertierenden Eingang des Komparators 73 unterschreiten und die Steuerschaltung 7 zur Begrenzung der Ausgangsspannung Ansteuerimpulse auslassen kann. Der Widerstand 45 kann entfallen, wenn am Ausgang des Durchflußumrichters eine ausreichende Vorlast vorhanden ist.

Der Durchflußumrichter weist somit eine Konstantspannungsregelung mittels unterlagerter Stromregelung, d.h. eine sogenannte Current-Mode-Regelung auf.

Die Referenzspannungsquelle 74 ist einpolig mit dem Minuspol des Umrichtereingangs verbunden. An die Referenzspannungsquelle 74 ist der aus den Widerständen 66 und 67 bestehende Spannungsteiler angeschlossen, an dessen Abgriff die weitere Referenzspannung U67 zur Verfügung steht.

Das aus dem Widerstand 31, dem Kondensator 32 und der Diode 33 bestehende Entlastungsnetzwerk sorgt für eine wirksame Ausschaltentlastung des Leistungsschalters 13. Das Entlastungsnetzwerk enthält eine aus der Diode 33 und dem Kondensator 32 bestehende Serienschaltung, die parallel zur Drain-Source-Strecke des Feldeffekttransistors 130 angeordnet ist. Parallel zur Diode 33 der Serienschaltung liegt der Widerstand 31. Die Diode 33 ist in bezug auf die Eingangsspannung U1 in Durchlaßrichtung gepolt.

Parallel zum Kondensator 32 liegen mehrere Stromzweige, die jeweils aus einem weiteren Kondensator 34 bzw. 36 und einem dazu in Serie angeordneten Feldeffekttransistor 35 bzw. 37 bestehen. Die Feldeffekttransistoren 35 und 37 bilden jeweils einen elektronischen Schalter, der den damit verbundenen Kondensator 34 bzw. 36 wahlweise parallel zum Kondensator 32 des Entlastungsnetzwerkes schaltet.

Die Gate-Elektrode des Feldeffekttransistors 35 ist an den Ausgang des Komparators 63 angeschlossen. Die Gate-Elektrode des Feldeffekttransistors 37 liegt am Ausgang eines nicht dargestellten weiteren Komparators. Der Komparator 63 vergleicht eine eigene Referenzspannung U67 mit der Gleichspannung U42, die ein Maß für den Ausgangsstrom I20 des Durchflußumrichters ist und am Anschluß a zur Verfügung steht.

In vorteilhafter Weise wird dabei das vom Spannungsregler am Fototransistor 42 erzeugte Signal zugleich als Meßgröße für den Ausgangsstrom I20 verwendet.

Zwischen dem Ausgang und dem nicht invertierenden Eingang des Komparators 63 ist der Widerstand 64 angeordnet. Am invertierenden Eingang des Komparators 63 liegt die Referenzspannung U67, die mit Hilfe des an die Referenzspannungsquelle 74 angeschlossenen Spannungsteilers 66, 67 gewonnen wird. Der nicht invertierende Eingang des Komparators 63 ist über den Widerstand 61 an den Anschluß a des Spannungsteilers 41, 42 angeschlossen. Der Ausgang des Komparators 63 ist über den Widerstand 65 an die Hilfsspannung U3 gelegt.

Parallel zur Serienschaltung aus Kondensator 34 und Feldeffekttransistor 35 können die eine Serienschaltung 36, 37 oder mehrere derartige Serienschaltungen vorgesehen sein. Die Gate-Elektrode des Feldeffekttransistors wird dann jeweils mit Hilfe eines eigenen Komparators gesteuert, der an eine eigene Referenzspannung angeschlossen ist , so daß sich eine stufenweise Umschaltung der Kapazität der Entlastungsschaltung ergibt.

Die Komparatoren sind dann zweckmäßigerweise mit ihren invertierenden Eingängen an verschieden große Referenzspannungen und und mit ihren nicht invertierenden Eingängen an dasselbe, vom Anschluß a stammende Gleichsignal gelegt. Die Referenzspannungen können gegebenenfalls mit Hilfe eigener Spannungsteiler aus einer gemeinsamen renzspannungsquelle, insbesondere der eines als Steuerschaltung 7 dienenden integrierten Regler-Schaltkreises gewonnen werden.

Die Komparatoren sprechen dann bei verschiedenen Werten des Durchflußwandler-Ausgangsstromes I20 an. Übersteigt der Ausgangsstrom I20 eine erste Schwelle, so spricht der Komparator 63 an und steuert den Feldeffekttransistor 35 leitend. Übersteigt der Ausgangsstrom I20 eine zweite oder weitere Schwelle, so spricht jeweils ein weiterer Komparator an und überführt auch den zugehörigen Feldeffekttransistor 37 in den leitenden Zustand.

Auf diese Weise wird mit Hilfe der durch die Steuervorrichtung 6 wahlweise anschaltbaren Kondensatoren der Kondensator 32 des Entlastungsnetzwerkes in Abhängigkeit von der Belastung des Durchflußumrichters modifiziert.

Der Durchflußumrichter nach Fig. 1 ermöglicht eine optimale Bemessung der RCD-Beschaltung für hohe Ausgangsströme. Hierdurch ist eine minimale Beanspruchung des Leistungsschalters 13 und eine optimale Ausnutzung des Transformators 5 gegeben. Außerdem ist eine Anpassung der RCD-Beschaltung an den Schwachlastbetrieb durch Verkleinern der Kapazität der RCD-Beschaltung möglich. Hierdurch ergibt sich ein besonders großer Wirkungsgrad des Durchflußumrichters auch bei Schwachlast. Außerdem werden Probleme mit der Abmagnetisierung bei minimaler Eingangsspannung und Schwachlast vermieden, da auch in diesem Falle die Spannung am Leistungsschalter 13 genügend schnell aufgebaut wird. Die Hauptinduktivität des Transformators 5 kann vergleichsweise groß gewählt werden, so daß der Magnetisierungsstrom kleiner wird. Dies führt nochmals zu kleineren Kapazitäten und damit nochmals zu kleinerer Verlustleistung.

Die Steuer- und/oder Anzeigevorrichtung 7, 91 liegt zwischen dem Anschluß a und dem Minuspol des Umrichtereingangs. Je nach Anwendungsfall kann es zweckmäßig sein, beide Vorrichtungen 6 und 91 oder eine der beiden Vorrichtungen vorzusehen. Die Vorrichtung 91 kann insbesondere eine Anzeigevorrichtung enthalten, die das Erreichen eines vorgegebenen Grenzwertes des Ausgangsstromes I20 anzeigt. Andererseits kann die Vorrichtung 91 ein Strommeßinstrument zur Anzeige des Ausgangsstromes I20 enthalten.

Die Steuerschaltung 7 kann insbesondere ein Steuer-IC vom Typ TDA 4718 sein.

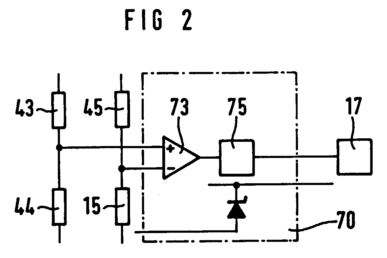

An die Stelle der Steuerschaltung 7 nach Fig. 1 kann die Steuerschaltung 70 nach Fig. 2 treten. Bei dieser Steuerschaltung 70 ist zwischen dem Komparator 72 und dem Treiber 17 das Monoflop 75 vorgesehen, das auf einen Triggerimpuls mit einem Ausgangsimpuls konstanter Dauer antwortet. Auf diese Weise ergibt sich für den Leistungsschalter 13 ein vorgegebener fester Wert für die Zeitabschnitte, in denen er den leitenden Zustand annimmt.

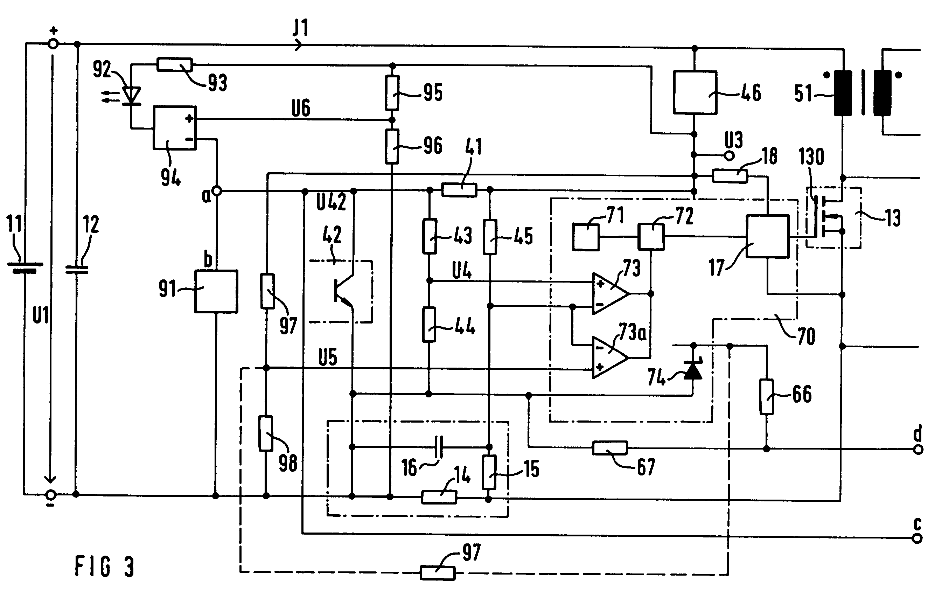

Fig. 3 zeigt eine Teilschaltung des Durchflußumrichters nach Fig. 1 in abgewandelter Form. Die Steuerschaltung 70 enthält zusätzlich zu dem Komparator 73 den Komparator 73a. Die invertierenden Eingänge der Komparatoren 73 und 73a sind unmittelbar miteinander verbunden. Der nicht invertierende Eingang des zusätzlichen Komparators 73a ist an den Abgriff eines Spannungsteilers gelegt, der zwischen der Hilfsspannung U3 und Bezugspotential angeordnet ist und aus den Widerständen 97 und 98 besteht. Anstatt an den Spannungsteiler 97, 98 kann der nicht invertierende Eingang des Komparators 73a über den Widerstand 97 an die Referenzspannungsquelle 74 angeschlossen sein.

Der Komparator 94 liegt mit seinem nicht invertierenden Eingang am Abgriff des aus den Widerständen 95 und 96 bestehenden und zwischen Hilfsspannung U3 und Bezugspotential angeordneten Spannungsteilers. Der invertierende Eingang des Komparators 94 ist mit dem Anschluß a für die dem Ausgangsstrom I20 proportionale Gleichspannung angeschlossen. Zwischen der Hilfsspannung U3 und dem Ausgang des Komparators 94 liegt die aus dem Widerstand 93 und der Leuchtdiode 92 bestehende Serienschaltung.

Ist der Ausgangsstrom des Durchflußumrichters größer oder gleich einem vorgegebenen Grenzwert, so spricht der zur Strombegrenzung dienende Komparator 73a an und löst den Komparator 73 ab. Der Durchflußumrichter befindet sich somit im Zustand der Strombegrenzung. Dadurch sinkt die Ausgangsspannung des Durchflußumrichters unter ihren Nennwert ab. Der Strom, den der Spannungsregler an den Optokoppler abgibt, nimmt den Wert Null an. Da der Fototransistor 42 somit nicht mehr leitet, springt das Potential am Punkt a auf den höchsten Wert, der durch den Spannungsteiler 41, 43 und 44 möglich ist. Der Komparator 94 spricht an und die Leuchtdiode 92 leuchtet. Die Leuchtdiode 92 zeigt an, daß sich der Durchflußumrichter im Zustand der Strombegrenzung befindet.

An die Stelle der Leuchtdiode 92 kann gegebenenfalls eine Anzeigevorrichtung anderer Art und oder eine Steuervorrichtung treten.

Die Steuerschaltung 70 kann insbesondere ein Steuer-IC vom Typ TDA 4916 G sein.

Die in Fig. 3 für einen Durchflußumrichter gezeigte Anordnung kann auch bei einem Sperrumrichter Verwendung finden. Soll dabei der Einsatzpunkt der Strombegrenzung unabhängig von der Eingangsspannung sein, so wird der mit Hilfe des Spannungsteilers 45, 15 gewonnenen Spannung zweckmäßigerweise eine von der Eingangsspannung U1 abhängige Spannung überlagert. Z.B. wird der invertierende Eingang der Komparatoren 73 und 73a über einen zusätzlichen Widerstand an die Eingangsspannung U1 geführt.

## Patentansprüche

1. Umrichter zur Erzeugung einer konstanten Ausgangsspannung mit einem elektronischen Schalter (13) im Primärkreis eines Transformators (5) und mit einem Differenzverstärker (87), an dessen Ausgang die Fotodiode (89) eines Optokopplers (89, 42) angeschlossen ist, wobei an den Eingängen des Differenzverstärkers eine aus der Ausgangsspannung (U2) gewonnene Meßspannung eine Referenzspannung anliegt und mit einem Komparator (73), dessen Sollwerteingang an den Ausgang des Differenzverstärkers (87) und dessen Istwerteingang an einen im primärseitigen Hauptstromkreis des Umrichters angeordneten Stromsensor (14...16) angeschlossen ist, wobei der Stromsensor eine Folge von Spannungsimpulsen mit trapezförmigem Verlauf abgibt und der elektronische Schalter (13) zu vorgegebenen Einschaltzeitpunkten periodisch einschaltbar und jeweils zu einem mit Hilfe des Komparators (73) bestimmten Zeitpunkt ausschaltbar ist,
daß der Fototransistor (42) des Optokopplers (89, 42) mit seiner Emitter-Kollektorstrecke einem an eine Hilfsspannung (U3) angeschlossenen Spannungsteiler (41, 42) angehört und daß an einem Abgriff des Spannungsteilers (41, 42) wenigstens eine Steuervorrichtung (6) zum Anschalten von Zusatzkapazitäten (34, 36) an ein Entlastungsnetzwerk (3) das parallel zum elektronischen Schalter (13) angeordnet ist und/oder eine Anzeigevorrichtung (91; 94, 92) zum Anzeigen eines vorgegebenen Grenzwertes des Ausgangsstroms (I20) des Umrichtes angeschlossen ist.

2. Umrichter nach Anspruch 1,
**dadurch gekennzeichnet,**
daß parallel zum Fototransistor (42) des Optokopplers ein Spannungsteiler (43, 44) liegt, an dessen Abgriff der nicht invertierende Eingang des Komparators (73) liegt.

3. Umrichter nach Anspruch 1 oder 2,
**dadurch gekennzeichnet**, daß der Umrichter ein Durchflußumrichter ist und daß die Steuer-und/oder Anzeigevorrichtung (6) einen Komparator enthält, mit dessen Hilfe die an den Leistungsschalter (13) angeschlossene Entlastungsschaltung (3) in Abhängigkeit vom Ausgangsstrom umschaltbar ist.

4. Umrichter nach Anspruch 1 oder 2,
**dadurch gekennzeichnet**,
daß die Steuer- und/oder Anzeigevorrichtung (91) eine Anzeigevorrichtung enthält, die das Erreichen eines vorgegebenen Grenzwertes des Ausgangsstromes anzeigt.

5. Umrichter nach einem der Ansprüche 1 bis 4,
**dadurch gekennzeichnet,**
daß die Steuer- und/oder Anzeigevorrichtung (91) ein Strommeßinstrument zur Anzeige des Ausgangsstromes (I2) enthält.

6. Umrichter nach einem der Ansprüche 1 bis 5,
**dadurch gekennzeichnet**,
daß zusätzlich zu dem an den Differenzverstärker (87) und an den Stromsensor (14) angeschlossenen Komparator (73) ein weiterer Komparator (73a) vorgesehen ist, und daß die invertierenden Eingänge und die Ausgänge der beiden Komparatoren (73, 73a) miteinander verbunden sind und daß der nicht invertierende Eingang des weiteren Komparators (73a) an eine Konstantspannung (U5) gelegt ist und daß an einen Abgriff (a) des Spannungsteilers (41, 42) der invertierende Eingang eines weiteren Komparators (94) angeschlossen ist, dessen nicht invertierender Eingang an einer Konstantspannung (U6) liegt und an dessen Ausgang eine Vorrichtung (92, 93) zur Signalgabe im Strombegrenzungsfall angeschlossen ist.

## Claims

1. Converter for producing a constant output voltage having an electronic switch (13) in the primary circuit of a transformer (5) and having a differential amplifier (87) to whose output the photodiode (89) of an optocoupler (89, 42) is connected, a measurement voltage which is obtained from the output voltage (U2) applying a reference voltage to the inputs of the differential amplifier, and having a comparator (73) whose reference value input is connected to the output of the differential amplifier (87) and whose actual value input is connected to a current sensor (14..,16) which is arranged in the primary-side main circuit of the converter, the current sensor emitting a sequence of voltage pulses having a trapezoidal waveform, and it being possible to switch the electronic switch (13) on periodically at predetermined switching-on times, and it being possible to switch said electronic switch (13) off in each case at a time which is determined with the aid of the comparator (73), in that the emitter-collector path of the phototransistor (42) of the optocoupler (89, 42) is part of a voltage divider (41, 42) which is connected to an auxiliary voltage (U3), and in that at least one control apparatus (6) for connecting additional capacitances (34, 36) to a snubber network (3), which is arranged in parallel with the electronic switch (13), and/or a display apparatus (91; 94, 92) for displaying a predetermined limit value of the output current (I20) of the converter are/is connected to a tap of the voltage divider (41, 42).

2. Converter according to Claim 1, characterized in that a voltage divider (43, 44), to whose tap the non-inverting input of the comparator (73) is connected, is connected in parallel with the phototransistor (42) of the optocoupler.

3. Converter according to Claim 1 or 2, characterized in that the converter is a forward converter and in that the control and/or display apparatus (6) contains a comparator with whose aid the snubber circuit (3), which is connected to the power switch (13), can be switched over as a function of the output current.

4. Converter according to Claim 1 or 2, characterized in that the control and/or display apparatus (91) contains a display apparatus which indicates when the output current reaches a predetermined limit value.

5. Converter according to one of Claims 1 to 4, characterized in that the control and/or display apparatus (91) contains a current measuring instrument for displaying the output current (I2).

6. Converter according to one of Claims 1 to 5, characterized in that a further comparator (73a) is provided in addition to the comparator (73) which is connected to the differential amplifier (87) and to the current sensor (14), in that the inverting inputs and the outputs of the two comparators (73, 73a) are connected to one another, in that the non-inverting input of the further comparator (73a) is connected to a constant voltage (U5), and in that the inverting input of a further comparator (94) is connected to a tap (a) of the voltage divider (41, 42), the non-inverting input of which further comparator (94) is connected to a constant voltage (U6), and an apparatus (92, 93) for producing a signal in the event of current limiting is connected to its output.

## Revendications

1. Convertisseur pour la production d'une tension de sortie constante avec un commutateur électronique (13) dans le circuit primaire d'un transformateur (5) et avec un amplificateur différentiel (87) à la sortie duquel est raccordée la photodiode (89) d'un coupleur optoélectronique (89, 42), une tension de mesure, tension de référence, obtenue à partir de la tension de sortie (U2) étant appliquée aux entrées de l'amplificateur différentiel, et avec un comparateur (73) dont l'entrée de la valeur de consigne est raccordée à la sortie de l'amplificateur différentiel (87) et dont l'entrée de la valeur effective est raccordée à un détecteur de courant (14 . . . 16 ) placé dans le circuit principal côté primaire du convertisseur, le détecteur de courant fournissant une série d'impulsions de tension à forme trapézoïdale et le commutateur électronique (13) étant connectable périodiquement à des moments de mise en service prédéterminés et déconnectable à un moment déterminé à l'aide d'un comparateur (73), la réalisation étant telle que:
que le phototransistor (42) du coupleur optoélectronique (89, 42) fait partie avec sa voie émetteur-collecteur d'un diviseur de tension (41, 42) raccordé à une tension auxiliaire (U3) et
que, au point milieu d'un diviseur de tension (41, 42), est raccordé au moins un dispositif de commande (6) pour la connexion de capacités complémentaires (34, 36) sur un réseau de délestage (3) qui est placé en parallèle sur un commutateur électronique (13), et/ou un dispositif d'affichage (91, 94, 92) pour afficher une valeur limite prédéterminée du courant de sortie (I20) du convertisseur.

2. Convertisseur selon la revendication 1,
**caractérisé par le fait**
qu'un diviseur de tension (43, 44) est placé en parallèle sur le phototransistor (42) du coupleur optoélectronique, son point milieu étant raccordé à l'entrée non-inverseuse du comparateur (73).

3. Convertisseur selon la revendication 1 ou la revendication 2,
**caractérisé par le fait**
que le convertisseur est un convertisseur de débit et que le dispositif de commande et/ou d'affichage (6) comporte un comparateur avec l'aide duquel le circuit de délestage (3) raccordé au sectionneur de puissance (13) peut être commuté en fonction du courant de sortie.

4. Convertisseur selon la revendication 1 ou la revendication 2,
**caractérisé par le fait**
que le dispositif de commande et/ou d'affichage (91) comporte un dispositif d'affichage qui indique que le courant de sortie atteint une valeur limite prédéterminée.

5. Convertisseur selon une des revendications 1 à 4,
**caractérisé par le fait**
que le dispositif de commande et/ou d'affichage (91) comporte un instrument de mesure de courant pour afficher le courant de sortie (I20).

6. Convertisseur selon une des revendications 1 à 5,
**caractérisé par le fait**
que, en plus du comparateur (73) raccordé à l'amplificateur différentiel (87) et au détecteur de courant (14), un comparateur supplémentaire (73a) est prévu et
que les entrées inverseuses et les sorties des deux comparateurs (73, 73a) sont reliées entre elles et
que l'entrée non-inverseuse du comparateur supplémentaire (73a) est reliée à une tension constante (U5) et
que l'entrée inverseuse d'un autre comparateur (94) est connectée au point milieu (a) du diviseur de tension (41, 42), son entrée non-inverseuse étant reliée à une tension constante (U6) et un dispositif (92, 93) de signalisation dans le cas de la limitation de courant étant connecté à sa sortie.
